# EUROPÄISCHE PATENTANMELDUNG

(11) **EP 1 128 604 A2**
(43) Veröffentlichungstag der Anmeldung: **29.08.2001**
(21) Anmeldenummer: 01104048.2
(22) Anmeldetag: 20.02.2001
(51) Int. Cl.: H04L 12/28

(54) **Vorrichtung zur Adaption von Anwendungen an ein Kommunikationsnetzwerk**

(30) Priorität: 21.02.2000 DE 20003119 U
(71) Anmelder: SIEMENS AKTIENGESELLSCHAFT, 80333 München (DE)
(72) Erfinder: Hammer, Jörg, 6331 Hünenberg (CH); Schirm, Andreas, 42555 Velbert (DE)

(57) **Zusammenfassung**

Die vorliegende Erfindung betrifft eine Vorrichtung zur Adaption von auf einem Prozessor eines im Bereich der Gebäudesystemtechnik zum Steuern, Regeln, Überwachen und/oder Melden einsetzbaren Mikrocontrollers lauffähigen Anwendungen an wenigstens ein Kommunikationsnetzwerk, insbesondere einen EIB, ein LON, ein BACNet oder dergleichen, umfassend eine Schnittstelle (2) zur Anbindung an eine Anwendung, wenigstens eine Schnittstelle (3,4,5,9) zur Anbindung an ein Kommunikationsnetzwerk, Mittel (6) zum Erzeugen seitens des Prozessors verarbeitbarer Anwendungen aus seitens des Kommunikationsnetzwerks gelieferter Informationen und Mittel (6) zum Erzeugen über das Kommunikationsnetzwerk übertragbarer Informationen aus seitens der Anwendungen gelieferter Informationen.

## Beschreibung

Die vorliegende Erfindung betrifft eine Vorrichtung zur Adaption von auf einem Prozessor eines im Bereich der Gebäudesystemtechnik zum Steuern, Regeln, Überwachen und/oder Melden einsetzbaren Mikrocontrollers lauffähigen Anwendungen an wenigstens ein Kommunikationsnetzwerk, insbesondere an ein European Installation Bus (EIB), ein LON, ein BACNet, Convergence-Systeme, KNX oder dergleichen.

Im Bereich der Gebäudesystemtechnik werden zur Steuerung, Regelung, Überwachung und/oder Meldung, aufgrund steigender Anforderungen hinsichtlich Flexibilität und Komfort der Elektroinstallationen, anstelle der herkömmlichen Installationen, bei denen jede zu realisierende Funktion, wie Temperaturregelung, Jalousiensteuerung, Einbruchüberwachungen, Sprenkelanlagen, Heizungssteuerungen, Lichtsteuerungen und dergleichen, eigene Energieversorgungs- und Steuerungssystemleitungen benötigen, über verschiedene Kommunikationsnetzwerke und Bussysteme, insbesondere dem sogenannten European Installation Bus (EIB), einem LON, einem BACNet, dem Batibus, über Convergence-Systeme und dergleichen, verschiedene Endgeräte unterschiedlicher Hersteller einheitlich betrieben. Die Endgeräte weisen dabei zur Realisierung der Steuer-, Regel-, Überwachungs- und/oder Meldungsaufgaben je nach Aufgabe und Hersteller unterschiedliche Mikrocontroller mit verschiedensten Prozessoren und Betriebssystemen auf, die mittels einer speziellen Treiber-Software an ein ein Bussystem umfassendes Kommunikationsnetzwerk angebunden sind, um über dieses mit anderen Endgeräten Informationen auszutauschen.

Durch die Verwendung eines derartigen Kommunikationsnetzwerkes anstelle der herkömmlichen Elektroinstallationen lassen sich einerseits Energieversorgungs- und Steuersystemleitungen einsparen und andererseits lässt sich die Installation in einem Gebäude wesentlich einfacher realisieren, problemlos erweitern und modifizieren, beispielsweise bei Nutzungsänderungen oder Änderungen von Raumaufteilungen durch einfache Neuzuordnung bzw. Umparametrierung der unterschiedlichen Busteilnehmer , d.h. der Endgeräte, ohne dass Leitungen neu verlegt werden müssen. Dabei erfolgt die Umparametrierung beispielsweise mit Hilfe eines an das Kommunikationsnetzwerk angeschlossenen Rechners (PC).

Über das Bussystem des Kommunikationsnetzwerkes können, wie bereits erläutert, alle als Busteilnehmer angeschlossenen Endgeräte untereinander Informationen austauschen. Die Informationsübertragung erfolgt dabei in der Regel seriell und nach exakt festgelegten Regeln, dem sogenannten Busprotokoll. Dabei wird die zu übertragende Information in ein sogenanntes Telegramm verpackt und über den Bus des Kommunikationsnetzwerkes von einem Sensorikelement als Befehlsgeber zu einem oder mehreren Aktorikelementen als Befehlsempfänger übertragen.

Zur Anbindung der verschiedenen endgeräteseitig vorhandenen Mikrocontroller bzw. Prozessoren, welche mitunter unterschiedlichste Informationstelegramme verwenden, an das Kommunikationsnetzwerk, werden in der Regel integrierte Schaltkreise (IC) verwendet, welche eine Anpassung der Informationstelegramme an den seitens des Kommunikationsnetzwerks geforderten Aufbau übernehmen. Diese integrierten Schaltkreise (IC) verursachen endgerätseitig zusätzliche Kosten und bewirken ihrerseits eine Bindung an den integrierten Schaltkreis (IC).

So lassen sich beispielsweise umfangreichere und komplexere Anwendungen (Applikationsprogramme) für Heizungsregelungen und dergleichen nur mit kostenintensiven Spezial-Chipsätzen an einen European Installation Bus (EIB) anbinden. Die einzelnen Anwendungen sind dabei prozessor- und systemabhängig. Die Beschränkung auf einen jeweiligen Spezial-Chipsatz hat zur Folge, dass die Anwendungen relativ umfangreich sind und große Ladezeiten mit sich bringen, um diese in den Prozessor bzw. Mikrocontroller eines Endgerätes herunterzuladen. Verschiedene Anwendungen, beispielsweise Heizungsregelungen oder dergleichen, sind daher nur auf bestimmten endgeräteseitigen Systemen, d.h. auf deren Prozessoren bzw. Mikrocontrollern lauffähig.

Der Erfindung liegt in Anbetracht dieses Standes der Technik die Aufgabe zugrunde, eine Adaptionsvorrichtung der eingangs genannten Art bereitzustellen, welche es unter Meidung der beschriebenen Nachteile ermöglicht, Mikrocontroller prozessor- und betriebssystemunabhängig zu adaptieren.

Die Aufgabe ist erfindungsgemäß gelöst, durch eine Vorrichtung zur Adaption von auf einem Prozessor eines im Bereich der Gebäudesystemtechnik zum Steuern, Regeln, Überwachen und/oder Melden einsetzbaren Mikrocontrollers lauffähigen Anwendungen an wenigstens ein Kommunikationsnetzwerk, insbesondere an einen EIB, ein LON, ein BACNet, Convergence-Systeme, KNX oder dergleichen, umfassend eine Schnittstelle zur Anbindung an eine Anwendung, wenigstens eine Schnittstelle zur Anbindung an ein Kommunikationsnetzwerk, Mittel zum Erzeugen seitens des Prozessors verarbeitbarer Anwendungen aus seitens des Kommunikationsnetzwerkes gelieferter Informationen und Mittel zum Erzeugen über das Kommunikationsnetzwerk übertragbarer Informationen aus seitens der Anwendungen gelieferter Informationen.

Durch die erfindungsgemäße Adaptionsvorrichtung lassen sich unterschiedlichste Anwendungen, insbesondere für EIB-Endgeräte und -produkte überaus einfach an ein Kommunikationsnetzwerk, insbesondere an einen European Installation Bus (EIB) adaptieren. Durch die Erzeugungsmittel seitens der erfindungsgemäßen Adaptionsvorrichtung ist die Adaption dabei prozessor- und betriebssystemunabhängig. Die erfindungsgemäße Adaptionsvorrichtung schafft dabei eine Zwischenkommunikation zwischen den einzelnen Anwendungen und dem Kommunikationsnetzwerk. Seitens des Kommunikationsnetzwerks an eine Anwendung eines Endgerätes angelieferter Information bedarf lediglich der abstrakten Funktionalität der Anwendung, da seitens der Erzeugungsmittel aus diesen Informationen die konkrete Anwendung, d.h. der der abstrakten Funktionalität zugrundeliegende Maschinencode der Anwendung in Abhängigkeit des jeweils verwendeten Prozessors erzeugt wird. Gemäß einer vorteilhaften Ausgestaltung der Erfindung sind die Anwendungen seitens der Erzeugungsmittel aus mehreren Teilanwendungen zusammengesetzt.

Gemäß einer weiteren besonders vorteilhaften Ausgestaltung der Erfindung ist die Adaptionsvorrichtung eine virtuelle Maschine, welche auf dem Prozessor des Mikrocontrollers läuft, vorzugsweise als ein in JAVA geschriebenes Softwareprogramm. Die erfindungsgemäße Adaptionsvorrichtung ist damit als eine sogenannte "JAVA-Virtual Machine" ausgebildet, die auf einer beliebigen endgeräteseitig vorhandenen Hardware-Plattform, d. h. einem Prozessor eines Mikrocontrollers lauffähig ist. Dies ermöglicht eine wesentliche Verbesserung hinsichtlich der Entwicklung von Anwendungen für Endgeräte, insbesondere für EIB-Produkte. Vorteilhafterweise sind alle Schnittstellen der erfindungsgemäßen Adaptionsvorrichtung als JAVA-Objekte definiert. Die Anwendungen bestehen somit nur aus einem BYTE-Code, der auf jedem beliebigem Prozessor lauffähig ist. Durch die Verwendung des BYTE-Codes lassen sich die über das Kommunikationsnetzwerk zu übertragenden Anwendungen hinsichtlich ihres Datenumfangs stark verkleinern, so dass seitens der Endgeräte geringere Ladezeiten erforderlich sind. Die Verwendung des BYTE-Codes erlaubt, äußerst komplexe Anwendungen auf einfache Weise zu generieren. Darüber hinaus brauchen aufgrund der Verwendung des BYTE-Codes bereits lauffähige Anwendungen bzw. Teilanwendungen bei einem Wechsel von Prozessor bzw. Mikrocontroller kommunikationsseitig, d.h. auf einer abstrakten Ebene nicht neu geschrieben und getestet werden.

Darüber hinaus ermöglicht die Verwendung von JAVA eine überaus einfache Anbindung an das Internet.

Die eigentliche Anwendung läuft somit auf dem Prozessor und wird seitens der über das Kommunikationsnetzwerk an die Adaptionsvorrichtung gesendeten Informationen gestartet. Gemäß einem weiteren vorteilhaften Vorschlag der Erfindung werden die Anwendungen mittels JAVA-Applets und/oder JAVA-Beans generiert. JAVA ist eine von Sun Microsystems entwickelte Interpretersprache, die ähnlich strukturiert ist wie die objektorientierte Programmiersprache C++. JAVA Applets sind mit JAVA erstellte kleine Programme, die in HTML-Seiten eingebaut und dort für interaktive Anwendungen genutzt werden können. HTML(Hyper Text Markup Languages) wurde speziell für die Internet-Technologie entwickelt und ist die Basis des World Wide Web (WWW). Das HTML-Format beschreibt die grafische Formatierung von Texten und die Einbindung von Bildern und Ereignissen. Mit Hyper Text wird die Möglichkeit verstanden, über in einem Text enthaltene Querverweise an eine andere Stelle in einem Text zu springen, im World Wide Web (WWW) konkret, eine andere Selbst-Seite zu laden. JAVA-Beans sind JAVA-Komponenten, die noch leistungsfähiger sind als JAVA-Applets, d.h. andere bzw. weitere Möglichkeiten bieten.

JAVA selbst bietet umfangreiche Vorteile. So ist JAVA beispielsweise plattformneutral, einfach, sicher, schnell und dynamisch. Die Schnelligkeit von JAVA beruht darauf, daß in einem in JAVA entwickelten Applet zwei Technologien vereinigt sind. Zum einen wird der Quellcode eines Programms zunächst in den sogenannten JAVA-BYTE-Code übersetzt. Anschließend wird das so entstandene Applet von einem in gängigen Web-Browsern vorhandenen Interpreter ausgeführt. Die im Applet eingesetzten Bibliotheken zur Erzeugung von Text-, Grafik- und Steuer- bzw. Regelungskomponenten werden erst bei Ausführung des Programms, also zur Laufzeit ausgeführt, also auf dem jeweiligen Prozessor bzw. Mikrocontroller des Endgerätes. Die mit JAVA und im Internet gegebenen Leistungsmerkmale lassen sich so auf einfache und kostengünstige Art und Weise zum Bedienen und Beobachten von im Bereich der Gebäudesystemtechnik gegebenen Steuerungen, Regelungen, Überwachungen und/oder Meldungen einsetzen. Mit einer weiteren vorteilhaften Ausgestaltung der Erfindung umfasst die Adaptionsvorrichtung des weiteren eine Schnittstelle zur Anbindung einer Eingabeeinrichtung, vorzugsweise einen Internet-Browser.

Gemäß einer weiteren vorteilhaften Ausgestaltung der Erfindung steuert die Vorrichtung selbst eine Anzeige- und/oder Eingabeeinrichtung. Von Vorteil ist dabei, dass die dazu notwendige Anzeige- und/oder Eingabeeinrichtungs-Software, da diese in JAVA geschrieben ist, sowohl auf der erfindungsgemäßen Vorrichtung als auch auf jeder anderen JAVA-Virtual-Machine lauffähig ist, beispielsweise auf einem PC mit Browser, einem Palm mit WinCE einem Handy mit JAVA-Virtual-Machine oder dergleichen.

Gemäß einer weiteren vorteilhaften Ausgestaltung der Erfindung sind die Erzeugungsmittel bidirektional auf wenigstens einen Speicherbereich zugreifend ausgebildet. Vorteilhafterweise sind die JAVA-Objekte der Schnittstellen als standardisierte Klasse im ROM des Prozessors bzw. des Mikrocontrollers abgespeichert.

Durch die erfindungsgemäße Verwendung einer sogenannten "JAVA-Virtual Machine" als Adaptionsvorrichtung lassen sich entsprechend ausgebildete Klassen von Kommunikationsnetzwerken, insbesondere Kommunikationsmodelle wie EIB, LON, BACNet, Convergence-Systeme, KNX und dergleichen portieren.

Gemäß einer weiteren vorteilhaften Ausgestaltung der Erfindung ist diese als JAVA-Virtual-Machine ausgebildet, auf welcher vorzugsweise Jini-Connection-Technology zur Automatisierung der Kommunikation von Endgeräten aufgesetzt ist. Jini-Connection-Technology ist eine von Sun Microsystems entwickelte, auf JAVA basierende Technologie, die eine einheitliche Kommunikation zwischen verschiedensten Endgeräten ermöglicht. Dabei stellt jedes Endgerät Leistungen bereit, die von anderen verbundenen Endgeräten genutzt werden können.

Damit sind Anwendungen (Applikationsprogramme) unabhängig von Kommunikationsnetzwerken und von diesen verwendeten Kommunikationsprotokollen entwickelbar. Darüber hinaus sind dynamische Instanzen von Anwendungen möglich und es lassen sich verteilte Anwendungen erstellen.

Weitere Einzelheiten, Merkmale und Vorteile der Erfindung werden nachfolgend anhand des in der Figur dargestellten Ausführungsbeispiels näher erläutert. Dabei zeigt:

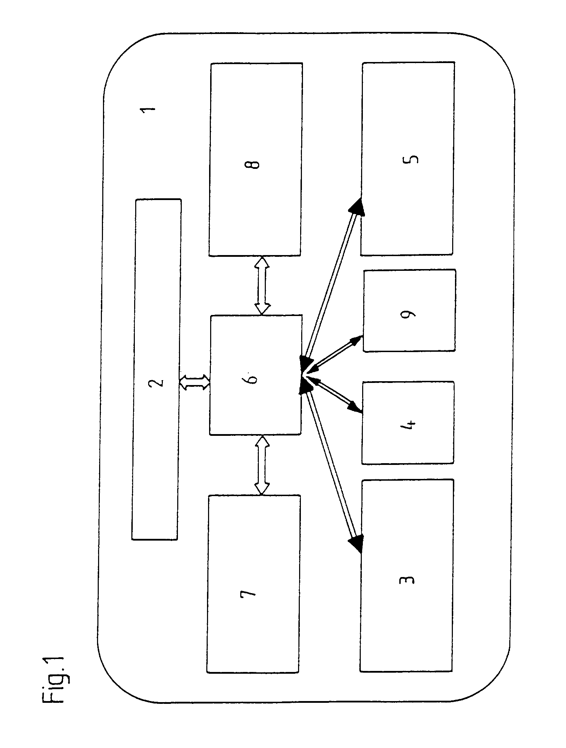

- FIG 1: in einem Blockdiagramm schematisch den Aufbau einer erfindungsgemäßen Adaptionsvorrichtung.

Das Blockdiagramm gemäß FIG 1 zeigt den prinzipiellen Aufbau einer Adaptionsvorrichtung 1 zur Anbindung von auf einem Prozessor eines im Bereich der Gebäudesystemtechnik zum Steuern, Regeln, Überwachen und/oder Melden einsetzbaren Mikrocontrollers lauffähigen Anwendungen an drei Kommunikationsnetzwerke.

Die Adaptionsvorrichtung 1 umfasst eine Schnittstelle 2 zur Anbindung an eine auf einem hier nicht dargestellten Prozessor eines Mikrocontrollers lauffähigen Anwendung, und vier Schnittstellen 3, 4,5 und 9 zur Anbindung an Kommunikationsnetzwerke, vorliegend an einen EIB, ein LON, ein KNX und ein BACNet.

Die Adaptionsvorrichtung 1 weist des weiteren Erzeugungsmittel 6 zum Erzeugen seitens des Prozessors verarbeitbarer Anwendungen aus seitens der Kommunikationsnetzwerke gelieferter Informationen und zum Erzeugen über das Kommunikationsnetzwerk übertragbare Informationen aus seitens der Anwendungen gelieferter Informationen auf, welche seitens einer sogenannten "JAVA-Virtual Machine" bereitgestellt werden. Die Erzeugungsmittel 6 ("JAVA-Virtual Machine") sind bidirektional mit den Schnittstellen 2, 3, 4, 5, und 9 verbunden und schaffen so eine Zwischenkommunikation zum Austauschen von Informationen zwischen Kommunikationsnetzwerken und den auf den Prozessor des Mikrocontrollers laufenden Anwendungen.

Die Adaptionsvorrichtung 1 weist des weiteren eine Schnittstelle 7 zur Anbindung einer Eingabeeinrichtung, vorliegend ein Internet-Browser, auf, welche ebenfalls einen bidirektionalen Informationsaustausch mit den Erzeugungsmitteln 6 ermöglicht. Die Schnittstelle 7 bildet dabei eine sogenannte "Mensch-Maschine-Schnittstelle".

Die Adaptionsvorrichtung 1 weist darüber hinaus einen Speicher 8 auf, welcher bidirektional mit den Erzeugungsmitteln 6 in Verbindung steht. Der Speicher 8 umfasst prozessorspezifische Programme, die seitens der Erzeugungsmittel verwendet werden, um seitens des Kommunikationsnetzwerks gelieferte Informationen, in der Regel abstrakte Anwendungen bzw. Teilanwendungen, seitens der Erzeugungsmittel 6 in konkrete prozessorabhängige Anwendungen zu generieren und auf dem Prozessor ablaufen zu lassen. Auf diese Art und Weise müssen über das Kommunikationsnetzwerk lediglich die abstrakt formulierten Anwendungen übertragen werden, welche hinsichtlich ihres Datenvolumens wesentlich geringer sind und so dem jeweiligen Endgerät schneller zugeführt werden können, so dass das Kommunikationsnetzwerk entlastet wird. Insbesondere bei dynamisch geladenen Anwendungen wird das Kommunikationsnetzwerk entlastet und durch die kürzeren Übertragungszeiten ist eine schnellere Verfügbarkeit solcher Anwendungen gegeben, was insbesondere bei der Inbetriebnahme von solchen Kommunikationsnetzwerken zu Zeitersparnissen führt.

## Patentansprüche

1. Vorrichtung zur Adaption von auf einem Prozessor eines im Bereich der Gebäudesystemtechnik zum Steuern, Regeln, Überwachen und/oder Melden einsetzbaren Mikrocontrollers lauffähigen Anwendungen an wenigstens ein Kommunikationsnetzwerk, insbesondere an einen EIB, ein LON, ein BACNet, Convergence-Systeme, KNX oder dergleichen, umfassend eine Schnittstelle (2) zur Anbindung an eine Anwendung, wenigstens eine Schnittstelle (3,4,5) zur Anbindung an ein Kommunikationsnetzwerk, Mittel (6) zum Erzeugen seitens des Prozessors verarbeitbarer Anwendungen aus seitens des Kommunikationsnetzwerks gelieferter Informationen und Mittel (6) zum Erzeugen über das Kommunikationsnetzwerk übertragbarer Informationen aus seitens der Anwendungen gelieferter Informationen.

2. Vorrichtung nach Anspruch 1, **dadurch gekennzeichnet**, dass diese eine virtuelle Maschine ist, welche auf dem Prozessor des Mikrocontrollers läuft, vorzugsweise als ein in JAVA geschriebenes Softwareprogramm.

3. Vorrichtung nach Anspruch 1 oder Anspruch 2, des weiteren umfassend eine Schnittstelle (7) zur Anbindung einer Eingabe- und/oder Anzeigeeinrichtung, vorzugsweise eines Internet-Browsers.

4. Vorrichtung nach einem der Ansprüche 1 bis 3, **dadurch gekennzeichnet**, dass die Erzeugungsmittel (6) bidirektional auf wenigstens einen Speicherbereich (8) zugreifend ausgebildet sind.

5. Vorrichtung nach einem der Ansprüche 1 bis 4, **dadurch gekennzeichnet**, dass die Anwendungen seitens der Erzeugungsmittel (6) aus mehreren Teilanwendungen zusammengesetzt ausgebildet sind.

6. Vorrichtung nach einem der Ansprüche 1 bis 5, **dadurch gekennzeichnet**, dass die Schnittstellen (2,3,4,5,7) als JAVA-Objekte definiert sind.

7. Vorrichtung nach einem der Ansprüche 1 bis 6, **dadurch gekennzeichnet**, dass die JAVA-Objekte als standardisierte Klasse in einem Speicher (8) des Prozessors bzw. des Mikrocontrollers speicherbar sind.

8. Vorrichtung nach einem der Ansprüche 1 bis 7, **dadurch gekennzeichnet**, dass die Anwendungen dynamische Instanzen aufweisen.

9. Vorrichtung nach einem der Ansprüche 1 bis 8, **dadurch gekennzeichnet**, dass die Anwendungen verteilt ausbildbar sind.

10. Vorrichtung nach einem der vorhergehenden Ansprüche, **dadurch gekennzeichnet**, dass diese eine JAVA-Virtual-Machine ist, auf welcher vorzugsweise Jini-Connection-Technology zur Automatisierung der Kommunikation von Endgeräten aufgesetzt ist.
